# EUROPÄISCHE PATENTSCHRIFT

(11) **EP 2 559 137 B1**
(45) Veröffentlichungstag und Bekanntmachung des Hinweises auf die Patenterteilung: **10.06.2020**
(21) Anmeldenummer: 11707822.0
(22) Anmeldetag: 03.03.2011
(51) Int. Cl.: H02J 7/02, H02M 7/483, H02M 7/49, B60L 15/00, B60L 58/18, B60L 58/21, H01M 10/0525, H01M 10/42

(54) **KOPPELEINHEIT UND BATTERIEMODUL MIT INTEGRIERTEM PULSWECHSELRICHTER UND IM BETRIEB AUSTAUSCHBAREN ZELLMODULEN**
COUPLING UNIT AND BATTERY MODULE COMPRISING AN INTEGRATED PULSE WIDTH MODULATION INVERTER AND CELL MODULES THAT CAN BE REPLACED DURING OPERATION
UNITÉ DE COUPLAGE ET MODULE DE BATTERIE PRÉSENTANT UN ONDULEUR À IMPULSIONS INTÉGRÉ ET DES MODULES D'ÉLÉMENTS POUVANT ÊTRE REMPLACÉS EN COURS DE FONCTIONNEMENT

(30) Priorität: 16.04.2010 DE 102010027861
(43) Veröffentlichungstag der Anmeldung: 20.02.2013
(73) Patentinhaber: Samsung SDI Co., Ltd., Gyeonggi-do (KR); Robert Bosch GmbH, 70442 Stuttgart (DE)
(72) Erfinder: BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2011/053196
(87) Internationale Veröffentlichungsnummer: WO 2011/128153

(56) Entgegenhaltungen:
- EP-A1- 0 907 238
- US-A- 5 656 915
- US-A1- 2003 071 523

## Beschreibung

Die vorliegende Erfindung betrifft eine Koppeleinheit für ein Batteriemodul und ein Batteriemodul mit einer solchen Koppeleinheit.

### Stand der Technik

Es zeichnet sich ab, dass in Zukunft sowohl bei stationären Anwendungen, als auch bei Fahrzeugen wie Hybrid- und Elektrofahrzeugen vermehrt Batteriesysteme zum Einsatz kommen werden. Um die für eine jeweilige Anwendung gegebenen Anforderungen an Spannung und zur Verfügung stellbare Leistung erfüllen zu können, werden eine hohe Zahl von Batteriezellen in Serie geschaltet. Da der von einer solchen Batterie bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen. Dies kann entweder durch Vorsehen von mehreren Zellwickeln innerhalb eines Batteriezellengehäuses oder durch externes Verschalten von Batteriezellen geschehen. Dabei ist jedoch problematisch, dass es aufgrund nicht exakt identischer Zellkapazitäten und - spannungen zu Ausgleichsströmen zwischen den parallel geschalteten Batteriezellen kommen kann.

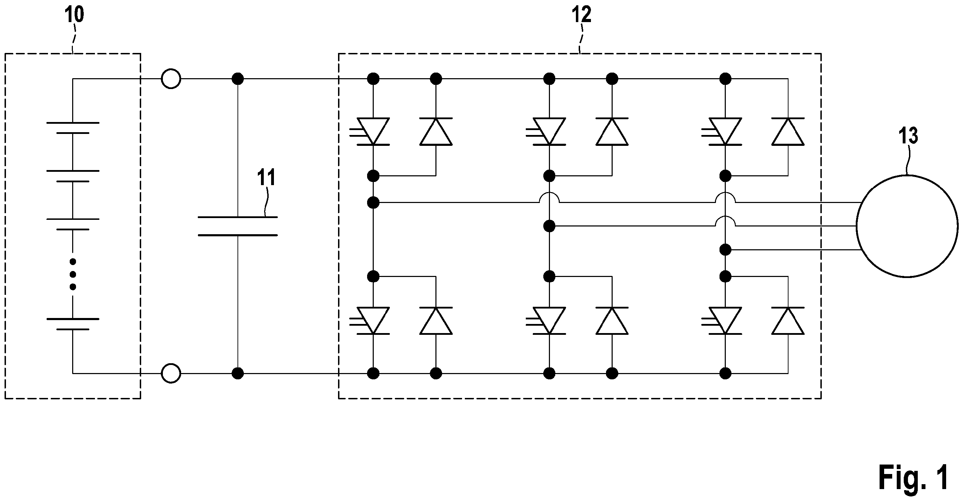

Das Prinzipschaltbild eines üblichen elektrischen Antriebssystems, wie es beispielsweise in Elektro- und Hybrid-Fahrzeugen oder auch in stationären Anwendungen wie bei der Rotorblattverstellung von Windkraftanlagen zum Einsatz kommt, ist in Fig. 1 dargestellt. Eine Batterie 10 ist an einen Gleichspannungszwischenkreis angeschlossen, welcher durch einen Kondensator 11 gepuffert wird. An den Gleichspannungszwischenkreis angeschlossen ist ein Pulswechselrichter 12, der über jeweils zwei schaltbare Halbleiterventile und zwei Dioden an drei Ausgängen gegeneinander phasenversetzte Sinusspannungen für den Betrieb eines elektrischen Antriebsmotors 13 bereitstellt. Die Kapazität des Kondensators 11 muss groß genug sein, um die Spannung im Gleichspannungszwischenkreis für eine Zeitdauer, in der eines der schaltbaren Halbleiterventile durchgeschaltet wird, zu stabilisieren. In einer praktischen Anwendung wie einem Elektrofahrzeug ergibt sich eine hohe Kapazität im Bereich von mF. Wegen der üblicherweise recht hohen Spannung des Gleichspannungszwischenkreises kann eine so große Kapazität nur unter hohen Kosten und mit hohem Raumbedarf realisiert werden.

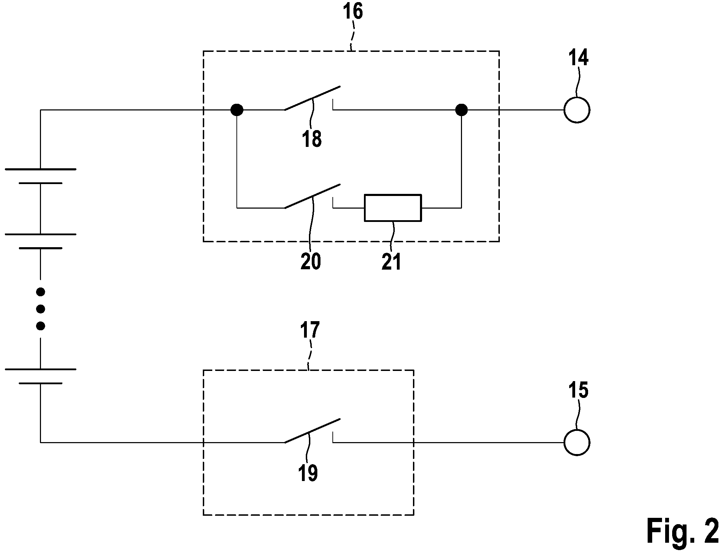

Fig. 2 zeigt die Batterie 10 der Fig. 1 in einem detaillierteren Blockschaltbild. Eine Vielzahl von Batteriezellen sind in Serie sowie optional zusätzlich parallel geschaltet, um eine für eine jeweilige Anwendung gewünschte hohe Ausgangsspannung und Batteriekapazität zu erreichen. Zwischen den Pluspol der Batteriezellen und ein positives Batterieterminal 14 ist eine Lade- und Trenneinrichtung 16 geschaltet. Optional kann zusätzlich zwischen den Minuspol der Batteriezellen und ein negatives Batterieterminal 15 eine Trenneinrichtung 17 geschaltet werden. Die Trenn- und Ladeeinrichtung 16 und die Trenneinrichtung 17 umfassen jeweils ein Schütz 18 beziehungsweise 19, welche dafür vorgesehen sind, die Batteriezellen von den Batterieterminals abzutrennen, um die Batterieterminals spannungsfrei zu schalten. Aufgrund der hohen Gleichspannung der seriengeschalteten Batteriezellen ist andernfalls erhebliches Gefährdungspotential für Wartungspersonal oder dergleichen gegeben. In der Lade- und Trenneinrichtung 16 ist zusätzlich ein Ladeschütz 20 mit einem zu dem Ladeschütz 20 in Serie geschalteten Ladewiderstand 21 vorgesehen. Der Ladewiderstand 21 begrenzt einen Aufladestrom für den Kondensator 11, wenn die Batterie an den Gleichspannungszwischenkreis angeschlossen wird. Hierzu wird zunächst das Schütz 18 offen gelassen und nur der Ladeschütz 20 geschlossen. Erreicht die Spannung am positiven Batterieterminal 14 die Spannung der Batteriezellen, kann das Schütz 19 geschlossen und gegebenenfalls das Ladeschütz 20 geöffnet werden. Die Schütze 18, 19 und das Ladeschütz 20 erhöhen die Kosten für eine Batterie 10 nicht unerheblich, da hohe Anforderungen an ihre Zuverlässigkeit und an die von ihnen zu führenden Ströme gestellt werden.

Die Serienschaltung einer hohen Zahl von Batteriezellen bringt neben der hohen Gesamtspannung das Problem mit sich, dass die gesamte Batterie ausfällt, wenn eine einzige Batteriezelle ausfällt, weil der Batteriestrom wegen der Serienschaltung in allen Batteriezellen fließen können muss. Ein solcher Ausfall der Batterie kann zu einem Ausfall des Gesamtsystems führen. Bei einem Elektrofahrzeug führt ein Ausfall der Antriebsbatterie zu einem sogenannten Liegenbleiber, bei anderen Vorrichtungen wie z.B. der Rotorblattverstellung bei Windkraftanlagen bei starkem Wind kann es sogar zu sicherheitsgefährdenden Situationen kommen. Daher ist eine hohe Zuverlässigkeit der Batterie vorteilhaft. Gemäß Definition bedeutet der Begriff "Zuverlässigkeit" die Fähigkeit eines Systems, für eine vorgegebene Zeit korrekt zu arbeiten. Ferner ist eine hohe Verfügbarkeit des Batteriesystems erstrebenswert. Als Verfügbarkeit wird die Wahrscheinlichkeit verstanden, ein reparierbares System zu einem gegebenen Zeitpunkt in einem funktionsfähigen Zustand anzutreffen.

### Offenbarung der Erfindung

Erfindungsgemäß wird daher eine Koppeleinheit für ein Batteriemodul nach Anspruch 1 eingeführt, wobei die Koppeleinheit einen ersten Eingang, einen zweiten Eingang, einen ersten Ausgang und einen zweiten Ausgang aufweist. Die Koppeleinheit ist ausgebildet, auf ein erstes Steuersignal hin den ersten Eingang mit dem ersten Ausgang und den zweiten Eingang mit dem zweiten Ausgang zu verbinden und auf ein zweites Steuersignal hin den ersten Eingang vom ersten Ausgang und den zweiten Eingang vom zweiten Ausgang abzutrennen und den ersten Ausgang mit dem zweiten Ausgang zu verbinden.

Die Koppeleinheit ermöglicht es, eine oder mehrere zwischen den ersten und den zweiten Eingang geschaltete Batteriezellen entweder so an den ersten und den zweiten Ausgang der Koppeleinheit zu koppeln, dass die Spannung der Batteriezellen extern zur Verfügung steht, oder aber die Batteriezellen durch Verbinden des ersten Ausganges mit dem zweiten Ausgang zu überbrücken, so dass eine Spannung von 0V von außen sichtbar ist. Die Zuverlässigkeit eines Batteriesystems kann somit gegenüber dem in Fig. 1 dargestellten massiv erhöht werden, weil der Ausfall einer einzelnen Batteriezelle nicht unmittelbar zum Ausfall des Batteriesystems führt. Zudem wird die Verfügbarkeit eines Batteriesystems stark verbessert, weil es durch das Abkoppeln des ersten und zweiten Einganges möglich wird, die an den ersten und zweiten Eingang angeschlossenen Batteriezellen spannungsfrei zu schalten und sodann im Betrieb zu entfernen und durch funktionsfähige zu ersetzen, welche dann wieder zugeschaltet werden können.

Die Koppeleinheit kann wenigstens einen Wechselschalter aufweisen, welcher ausgebildet ist, entweder einen von erstem oder zweitem Eingang mit dem ersten beziehungsweise zweiten Ausgang oder einen Mittenpunkt der Koppeleinheit mit dem ersten beziehungsweise zweiten Ausgang zu verbinden. Durch die Verwendung wenigstens eines Wechselschalters kann sichergestellt werden, dass bei Fehlfunktion der Koppeleinheit niemals der erste Eingang mit dem zweiten Eingang und somit eventuell angeschlossene Batteriezellen kurzgeschlossen werden. Allerdings ist ein Wechselschalter gewöhnlich nur als elektromechanischer Schalter realisierbar, was Nachteile hinsichtlich Preis, Größe und Ausfallsicherheit mit sich bringt.

Alternativ kann die Koppeleinheit einen ersten Schalter, welcher zwischen den ersten Eingang und den ersten Ausgang geschaltet ist, einen zweiten Schalter, welcher zwischen den zweiten Eingang und den zweiten Ausgang geschaltet ist, und einen dritten Schalter, welcher zwischen den ersten Ausgang und den zweiten Ausgang geschaltet ist, aufweisen. Eine solche Ausführung der Koppeleinheit eignet sich besonders gut für eine Realisierung mit Halbleiterschaltern, wobei wenigstens einer der Schalter bevorzugt als MOSFET-Schalter oder Insulated Gate Bipolar Transistor (IGBT)-Schalter ausgebildet ist.

Ein zweiter Erfindungsaspekt betrifft ein Batteriemodul mit einer Koppeleinheit gemäß dem ersten Erfindungsaspekt, und wenigstens einer Batteriezelle, vorzugsweise einer Lithium-Ionen-Batteriezelle, welche zwischen den ersten Eingang und den zweiten Eingang der Koppeleinheit geschaltet ist, wobei ein erstes Terminal des Batteriemoduls mit dem ersten Ausgang der Koppeleinheit und ein zweites Terminal des Batteriemoduls mit dem zweiten Ausgang der Koppeleinheit verbunden sind. Soll die Spannung der wenigstens einen Batteriezelle am ersten und zweiten Terminal des Batteriemoduls zur Verfügung stehen, wird der erste Eingang der Koppeleinheit auf deren ersten Ausgang und der zweite Eingang der Koppeleinheit auf deren zweiten Ausgang durchgeschaltet. Soll hingegen das Batteriemodul deaktiviert werden, wird der erste Eingang vom ersten Ausgang der Koppeleinheit und der zweite Eingang vom zweiten Ausgang der Koppeleinheit abgetrennt und der erste Ausgang mit dem zweiten Ausgang der Koppeleinheit verbunden. Dadurch werden das erste und das zweite Terminal leitend miteinander verbunden, so dass sich für das Batteriemodul eine Spannung von 0V ergibt.

Ein dritter Erfindungsaspekt führt eine Batterie mit einem oder mehreren, vorzugsweise genau drei, Batteriemodulsträngen, ein. Dabei umfasst ein Batteriemodulstrang eine Mehrzahl von in Serie geschalteten Batteriemodulen gemäß dem zweiten Erfindungsaspekt. Die Batterie weist ferner eine Steuereinheit auf, welche ausgebildet ist, das erste und das zweite Steuersignal für die Koppeleinheiten zu erzeugen und an die Koppeleinheiten auszugeben.

Die Batterie besitzt den Vorteil, dass auch bei Ausfall einer Batteriezelle das betroffene Batteriemodul deaktiviert werden kann, während die verbleibenden Batteriemodule weiterhin eine Spannung zur Verfügung stellen. Zwar sinkt so die von der Batterie maximal zur Verfügung stellbare Spannung, allerdings führt eine Senkung der Spannung in einer batteriebetriebenen Anordnung gewöhnlich nicht zu deren Gesamtausfall. Zudem ist es möglich, eine Anzahl von zusätzlichen Batteriemodulen vorzusehen, welche in die Serienschaltung der Batteriemodule entsprechend einbezogen werden, wenn eines der Batteriemodule ausfällt und deaktiviert werden muss. Dadurch wird die Spannung der Batterie nicht durch den Ausfall eines Batteriemoduls beeinträchtigt und die Funktionalität der Batterie unabhängig von dem Ausfall einer Batteriezelle, wodurch wiederum die Zuverlässigkeit der Gesamtanordnung massiv erhöht wird. Die Batteriezellen des deaktivierten Batteriemoduls sind durch Abtrennen sowohl des ersten als auch des zweiten Einganges zudem spannungsfrei (abgesehen von der vergleichsweise niedrigen Spannung des deaktivierten Batteriemoduls selbst) und können so im laufenden Betrieb ausgetauscht werden.

Weisen die Koppeleinheiten, wie oben beschrieben, erste, zweite und dritte Schalter auf, kann die Steuereinheit ausgebildet sein, entweder den ersten Schalter und den zweiten Schalter einer ausgewählten Koppeleinheit zu schließen und den dritten Schalter der ausgewählten Koppeleinheit zu öffnen, oder den ersten Schalter und den zweiten Schalter der ausgewählten Koppeleinheit zu öffnen und den dritten Schalter der ausgewählten Koppeleinheit zu schließen, oder den ersten, den zweiten und den dritten Schalter der ausgewählten Koppeleinheit zu öffnen. Werden alle drei Schalter geöffnet, wird das Batteriemodul hochohmig, wodurch der Stromfluss in dem Batteriemodulstrang unterbrochen wird. Dies kann im Wartungsfall nützlich sein, wo beispielsweise alle Batteriemodule eines Batteriemodulstranges in den hochohmigen Zustand versetzt werden können, um gefahrlos ein defektes Batteriemodul oder die gesamte Batterie austauschen zu können. Dadurch werden die in Fig. 2 gezeigten Schütze 17 und 18 des Standes der Technik überflüssig, da bereits die Koppeleinheiten die Möglichkeit bieten, die Batterie an ihren beiden Polen spannungsfrei zu schalten.

Die Steuereinheit kann außerdem ausgebildet sein, zu einem ersten Zeitpunkt alle ersten Eingänge der Koppeleinheiten eines ausgewählten Batteriemodulstranges mit den ersten Ausgängen der Koppeleinheiten des ausgewählten Batteriemodulstranges und alle zweiten Eingänge der Koppeleinheiten eines ausgewählten Batteriemodulstranges mit den zweiten Ausgängen der Koppeleinheiten des ausgewählten Batteriemodulstranges zu verbinden und zu einem zweiten Zeitpunkt alle ersten und zweiten Eingänge der Koppeleinheiten des ausgewählten Batteriemodulstranges von den ersten und zweiten Ausgängen der Koppeleinheiten des ausgewählten Batteriemodulstranges abzukoppeln und die ersten und zweiten Ausgänge der Koppeleinheiten des ausgewählten Batteriemodulstranges zu verbinden. Dadurch wird zum ersten Zeitpunkt die volle Ausgangsspannung des ausgewählten Batteriemodulstranges am Ausgang des Batteriemodulstranges zur Verfügung gestellt, während zum zweiten Zeitpunkt eine Spannung von 0V ausgegeben wird. Dadurch werden die Koppeleinheiten des Batteriemodulstranges als Pulswechselrichter betrieben, welcher, wie in Fig. 1 gezeigt, entweder den positiven Pol oder den negativen Pol des Gleichspannungszwischenkreises auf die Ausgänge des Pulswechselrichters durchschaltet. Durch Einsatz beispielsweise einer pulsweitenmodulierten Ansteuerung kann so eine näherungsweise sinusförmige Ausgangsspannung erzeugt werden, wobei die Motorwicklungen des Antriebsmotors als Filter wirken. Die Batterie der Erfindung kann somit die Funktion des Pulswechselrichters des Standes der Technik komplett übernehmen. Bei einer Ausführung mit mehreren Batteriemodulsträngen kann jeder Batteriemodulstrang eine gegenüber den anderen Batteriemodulsträngen phasenverschobene Ausgangsspannung erzeugen, so dass ein Antriebsmotor direkt mit der Batterie verbunden werden kann. Dabei ist zudem vorteilhaft, dass die Gesamtkapazität der Batterie auf mehrere Batteriemodulstränge verteilt wird, wodurch eine Parallelschaltung von Batteriezellen entfallen oder wenigstens in deutlich geringerem Ausmaß vorgenommen werden kann. Dadurch werden Ausgleichsströme zwischen parallel geschalteten Batteriezellen eliminiert oder wenigstens reduziert, was die Lebensdauer der Batterie erhöht. Anstelle eines einzigen Gleichspannungszwischenkreises wie in Fig. 1 ergeben sich somit so viele Gleichspannungszwischenkreise, wie Batteriemodulstränge vorgesehen sind. Dies bietet den Vorteil, dass eventuell vorgesehene Pufferkondensatoren kleiner dimensioniert werden oder vollständig entfallen können.

Die Batterie kann eine mit der Steuereinheit verbundene Sensoreinheit aufweisen, welche ausgebildet ist, eine defekte Batteriezelle zu detektieren und der Steuereinheit anzuzeigen. Die Steuereinheit ist dabei ausgebildet, ein Batteriemodul mit der defekten Batteriezelle durch Ausgeben geeigneter Steuersignale zu deaktivieren. Die Sensoreinheit kann beispielsweise eine Zellspannung der Batteriezellen oder andere Betriebsparameter der Batteriezellen messen, um auf den Zustand der Batteriezellen zu schließen. Hierbei kann eine "defekte Batteriezelle" nicht nur eine tatsächlich defekte Batteriezelle, sondern auch eine Batteriezelle sein, deren aktueller Zustand eine hohe Wahrscheinlichkeit anzeigt, dass in näherer Zukunft mit einem tatsächlichen Defekt der Batteriezelle zu rechnen ist.

Ein vierter Erfindungsaspekt betrifft ein Kraftfahrzeug mit einem elektrischen Antriebsmotor zum Antreiben des Kraftfahrzeuges und einer mit dem elektrischen Antriebsmotor verbundenen Batterie gemäß dem vorhergehenden Erfindungsaspekt.

### Zeichnungen

Ausführungsbeispiele der Erfindung werden anhand der Zeichnungen und der nachfolgenden Beschreibung näher erläutert, wobei gleiche Bezugszeichen gleiche oder funktional gleichartige Komponenten bezeichnen. Es zeigen:
Figur 1 ein elektrisches Antriebssystem gemäß dem Stand der Technik,
Figur 2 ein Blockschaltbild einer Batterie gemäß dem Stand der Technik,
Figur 3 eine Koppeleinheit gemäß der Erfindung,
Figur 4 eine erste Ausführungsform der Koppeleinheit,
Figur 5 eine zweite Ausführungsform der Koppeleinheit,
Figur 6 eine Ausführungsform des erfindungsgemäßen Batteriemoduls,
Figur 7 eine erste Ausführungsform der erfindungsgemäßen Batterie, und
Figur 8 ein Antriebssystem mit einer weiteren Ausführungsform der erfindungsgemäßen Batterie.

### Ausführungsformen der Erfindung

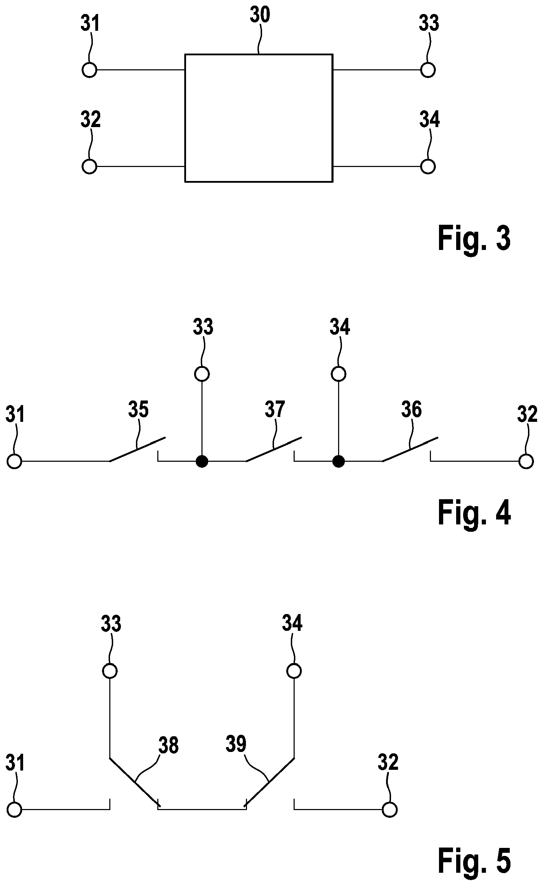

Figur 3 zeigt eine Koppeleinheit 30 gemäß der Erfindung. Die Koppeleinheit 30 besitzt zwei Eingänge 31 und 32 sowie zwei Ausgänge 33 und 34. Sie ist ausgebildet, entweder den ersten Eingang 31 mit dem ersten Ausgang 33 sowie den zweiten Eingang 32 mit dem zweiten Ausgang 34 zu verbinden (und den ersten Ausgang 33 vom zweiten Ausgang 34 abzukoppeln) oder aber den ersten Ausgang 33 mit dem zweiten Ausgang 34 zu verbinden (und dabei die Eingänge 31 und 32 abzukoppeln). Bei bestimmten Ausführungsformen der Koppeleinheit kann diese außerdem ausgebildet sein, beide Eingänge 31, 32 von den Ausgängen 33, 34 abzutrennen und auch den ersten Ausgang 33 vom zweiten Ausgang 34 abzukoppeln. Nicht vorgesehen ist jedoch, sowohl den ersten Eingang 31 mit dem zweiten Eingang 32 zu verbinden.

Figur 4 zeigt eine erste Ausführungsform der Koppeleinheit 30, bei der ein erster, ein zweiter und ein dritter Schalter 35, 36 und 37 vorgesehen sind. Der erste Schalter 35 ist zwischen den ersten Eingang 31 und den ersten Ausgang 33 geschaltet, der zweite Schalter ist zwischen den zweiten Eingang 32 und den zweiten Ausgang 34 und der dritte Schalter zwischen den ersten Ausgang 33 und den zweiten Ausgang 34 geschaltet. Diese Ausführungsform bietet den Vorteil, dass die Schalter 35, 36 und 37 einfach als Halbleiterschalter wie z.B. MOSFETs oder IGBTs verwirklicht werden können. Halbleiterschalter haben den Vorteil eines günstigen Preises und einer hohen Schaltgeschwindigkeit, so dass die Koppeleinheit 30 innerhalb einer geringen Zeit auf eine Steuersignal beziehungsweise eine Änderung des Steuersignales reagieren kann und hohe Umschaltraten erreichbar sind.

Figur 5 zeigt eine zweite Ausführungsform der Koppeleinheit 30, welche über einen ersten Wechselschalter 38 und einen zweiten Wechselschalter 39 verfügt. Es sind auch Ausführungsformen denkbar, bei denen nur einer der beiden Wechselschalter 38, 39 vorgesehen ist und der andere durch die Schalter 35 und 37 beziehungsweise 37 und 36 ersetzt wird. Die Wechselschalter 38, 39 besitzen die prinzipielle Eigenschaft, nur einen ihrer jeweiligen Eingänge auf ihren Ausgang durchschalten zu können, während der jeweils verbleibende Eingang abgekoppelt wird. Dies bietet den Vorteil, dass auch bei Fehlfunktion der eingesetzten Schalter oder Steuereinheit niemals der erste Eingang 31 der Koppeleinheit 30 mit dem zweiten Eingang 32 der Koppeleinheit 30 verbunden werden und so die angeschlossenen Batteriezellen kurzgeschlossen werden können. Die Wechselschalter 38 und 39 können besonders einfach als elektromechanische Schalter realisiert werden.

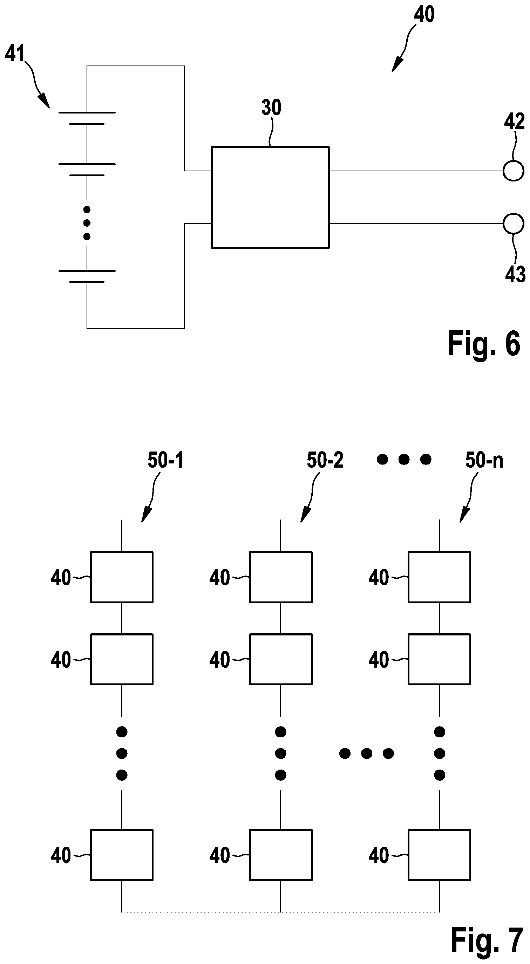

Die Figuren 6 zeigt eine Ausführungsform des erfindungsgemäßen Batteriemoduls 40. Eine Mehrzahl von Batteriezellen 41 ist zwischen die Eingänge einer Koppeleinheit 30 in Serie geschaltet. Die Erfindung ist jedoch nicht auf eine solche Serienschaltung von Batteriezellen beschränkt, es kann auch nur eine einzelne Batteriezelle vorgesehen sein oder aber eine Parallelschaltung oder gemischt-seriell-parallele Schaltung von Batteriezellen. Der erste Ausgang der Koppeleinheit 30 ist mit einem ersten Terminal 42 und der zweite Ausgang der Koppeleinheit 30 mit einem zweiten Terminal 43 verbunden. Wie bereits erklärt, bietet das Batteriemodul 40 den Vorteil, dass die Batteriezellen 41 von der Koppeleinheit 30 von der restlichen Batterie abgekoppelt und so im Betrieb ohne Gefahr ausgetauscht werden können.

Figur 7 zeigt eine erste Ausführungsform der erfindungsgemäßen Batterie, welche über n Batteriemodulstränge 50-1 bis 50-n verfügt. Jeder Batteriemodulstrang 50-1 bis 50-n weist eine Mehrzahl von Batteriemodulen 40 auf, wobei vorzugsweise jeder Batteriemodulstrang 50-1 bis 50-n dieselbe Anzahl von Batteriemodulen 40 und jedes Batteriemodul 40 dieselbe Anzahl von Batteriezellen in identischer Weise verschaltet enthält. Ein Pol eines jeden Batteriemodulstranges kann mit einem entsprechenden Pol der anderen Batteriemodulstränge verbunden sein, was durch eine gestrichelte Linie in Figur 7 angedeutet ist. Generell kann ein Batteriemodulstrang jede Zahl von Batteriemodulen größer 1 und eine Batterie jede Zahl von Batteriemodulsträngen enthalten. Auch können an den Polen der Batteriemodulstränge zusätzlich Lade- und Trenneinrichtungen und Trenneinrichtungen wie bei Figur 2 vorgesehen sein, wenn Sicherheitsbestimmungen dies erfordern. Allerdings sind solche Trenneinrichtungen erfindungsgemäß nicht notwendig, weil eine Abkopplung der Batteriezellen von den Batterieanschlüssen durch die in den Batteriemodulen 40 enthaltenen Koppeleinheiten 30 erfolgen kann.

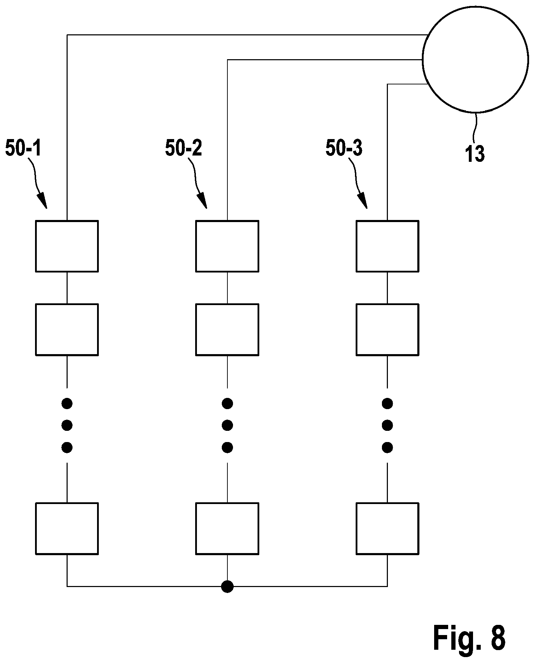

Figur 8 zeigt ein Antriebssystem mit einer weiteren Ausführungsform der erfindungsgemäßen Batterie. Im gezeigten Beispiel besitzt die Batterie drei Batteriemodulstränge 50-1, 50-2 und 50-3, welche jeweils direkt an einen Eingang eines Antriebsmotors 13 angeschlossen sind. Da die meisten verfügbaren Elektromotoren auf einen Betrieb mit drei Phasensignalen ausgelegt sind, besitzt die Batterie der Erfindung bevorzugt genau drei Batteriemodulstränge. Die Batterie der Erfindung besitzt den weiteren Vorzug, dass die Funktionalität eines Pulswechselrichters bereits in die Batterie integriert ist. Indem eine Steuereinheit der Batterie entweder alle Batteriemodule 40 eines Batteriemodulstranges aktiviert oder deaktiviert, stehen am Ausgang des Batteriemodulstranges entweder 0V oder die volle Ausgangsspannung des Batteriemodulstranges zur Verfügung. Durch geeignete Ansteuerung wie bei einem Pulswechselrichter, beispielsweise durch Pulsweitenmodulation, können so geeignete Phasensignale für den Antrieb des Antriebsmotors 13 bereitgestellt werden.

Die Erfindung besitzt außer den bereits genannten Vorteilen außerdem die Vorteile einer Reduktion der Anzahl von Hochvoltkomponenten, von Steckverbindungen und bietet die Möglichkeit, ein Kühlsystem der Batterie mit dem des Pulswechselrichters zu kombinieren, wobei ein Kühlmittel, das zur Kühlung der Batteriezellen eingesetzt wird, anschließend zur Kühlung der Komponenten des Pulswechselrichters (also der Koppeleinheiten 30) eingesetzt werden kann, da diese üblicherweise höhere Betriebstemperaturen erreichen und durch das von den Batteriezellen bereits erwärmte Kühlmittel noch hinreichend gekühlt werden können. Zudem wird es möglich, die Steuereinheiten der Batterie und des Pulswechselrichters zu kombinieren und so weiter Aufwand einzusparen. Die Koppeleinheiten bieten ein integriertes Sicherheitskonzept für Pulswechselrichter und Batterie und erhöhen die Zuverlässigkeit und Verfügbarkeit des Gesamtsystems sowie die Lebensdauer der Batterie.

Ein weiterer Vorteil der Batterie mit integriertem Pulswechselrichter ist, dass sie sehr einfach modular aus einzelnen Batteriemodulen mit integrierter Koppeleinheit aufgebaut werden kann. Dadurch wird die Verwendung von Gleichteilen (Baukastenprinzip) möglich.

## Patentansprüche

1. Eine Koppeleinheit (30) ohne eigene Energieversorgung für ein Batteriemodul (40), die Koppeleinheit (30) umfassend einen ersten Eingang (31), einen zweiten Eingang (32), einen ersten Ausgang (33) und einen zweiten Ausgang (34), **dadurch gekennzeichnet, dass** die Koppeleinheit (30) ausgebildet ist, auf ein erstes Steuersignal hin den ersten Eingang (31) mit dem ersten Ausgang (33) und den zweiten Eingang (32) mit dem zweiten Ausgang (34) elektrisch direkt zu verbinden und auf ein zweites Steuersignal hin den ersten Eingang (31) vom ersten Ausgang (33) und den zweiten Eingang (32) vom zweiten Ausgang (34) elektrisch abzutrennen und den ersten Ausgang (33) mit dem zweiten Ausgang (34) elektrisch direkt zu verbinden.

2. Die Koppeleinheit (30) gemäß Anspruch 1, mit wenigstens einem Wechselschalter (38, 39), welcher ausgebildet ist, entweder einen von erstem oder zweitem Eingang (31, 32) mit dem ersten beziehungsweise zweiten Ausgang (33, 34) oder einen Mittenpunkt der Koppeleinheit (30) mit dem ersten beziehungsweise zweiten Ausgang (33, 34) elektrisch zu verbinden.

3. Die Koppeleinheit (30) gemäß Anspruch 1, mit einem ersten Schalter (35), welcher zwischen den ersten Eingang (31) und den ersten Ausgang (33) elektrisch geschaltet ist, einem zweiten Schalter (36), welcher zwischen den zweiten Eingang (32) und den zweiten Ausgang (34) elektrisch geschaltet ist, und einem dritten Schalter (37), welcher zwischen den ersten Ausgang (33) und den zweiten Ausgang (34) elektrisch geschaltet ist.

4. Die Koppeleinheit (30) gemäß Anspruch 3, bei dem wenigstens einer von erstem Schalter (35), zweitem Schalter (36) oder drittem Schalter (37) als Halbleiterschalter, vorzugsweise als MOSFET-Schalter oder Insulated Gate Bipolar Transistor (IGBT)-Schalter ausgebildet ist.

5. Ein Batteriemodul (40) mit einer Koppeleinheit (30) ohne eigene Energieversorgung gemäß einem der vorhergehenden Ansprüche, und wenigstens einer Batteriezelle (41), vorzugsweise einer Lithium-Ionen-Batteriezelle, welche zwischen den ersten Eingang (31) und den zweiten Eingang (32) der Koppeleinheit (30) elektrisch geschaltet ist, wobei ein erstes Terminal (42) des Batteriemoduls (40) mit dem ersten Ausgang (33) der Koppeleinheit (30) und ein zweites Terminal (43) des Batteriemoduls (40) mit dem zweiten Ausgang (34) der Koppeleinheit (30) elektrisch verbunden sind.

6. Eine Batterie mit einem oder mehreren, vorzugsweise genau drei, Batteriemodulsträngen (50), wobei ein Batteriemodulstrang (50) eine Mehrzahl von in Serie geschalteten Batteriemodulen (40) gemäß Anspruch 5 umfasst, und einer Steuereinheit, welche ausgebildet ist, das erste und das zweite Steuersignal für die Koppeleinheiten (30) zu erzeugen und an die Koppeleinheiten (30) auszugeben.

7. Die Batterie gemäß Anspruch 6, bei der die Koppeleinheiten (30) gemäß einem der Ansprüche 3 oder 4 ausgebildet sind und bei der die Steuereinheit ausgebildet ist, entweder den ersten Schalter (35) und den zweiten Schalter (36) einer ausgewählten Koppeleinheit (30) zu schließen und den dritten Schalter (37) der ausgewählten Koppeleinheit (30) zu öffnen, oder den ersten Schalter (35) und den zweiten Schalter (36) der ausgewählten Koppeleinheit (30) zu öffnen und den dritten Schalter (37) der ausgewählten Koppeleinheit (30) zu schließen, oder den ersten, den zweiten und den dritten Schalter (35, 36, 37) der ausgewählten Koppeleinheit (30) zu öffnen.

8. Die Batterie gemäß einem der Ansprüche 6 oder 7, bei der die Steuereinheit außerdem ausgebildet ist, zu einem ersten Zeitpunkt alle ersten Eingänge (31) der Koppeleinheiten (30) eines ausgewählten Batteriemodulstranges (50) mit den ersten Ausgängen (33) der Koppeleinheiten (30) des ausgewählten Batteriemodulstranges (50) und alle zweiten Eingänge (32) der Koppeleinheiten (30) eines ausgewählten Batteriemodulstranges (50) mit den zweiten Ausgängen (34) der Koppeleinheiten (30) des ausgewählten Batteriemodulstranges (50) elektrisch zu verbinden und zu einem zweiten Zeitpunkt alle ersten und zweiten Eingänge (31, 32) der Koppeleinheiten (30) des ausgewählten Batteriemodulstranges (50) von den ersten und zweiten Ausgängen (33, 34) der Koppeleinheiten (30) des ausgewählten Batteriemodulstranges (50) elektrisch abzukoppeln und die ersten und zweiten Ausgänge (33, 34) der Koppeleinheiten (30) des ausgewählten Batteriemodulstranges (50) elektrisch zu verbinden.

9. Die Batterie gemäß einem der Ansprüche 6 bis 8, mit einer mit der Steuereinheit verbundenen Sensoreinheit, welche ausgebildet ist, eine defekte Batteriezelle (41) zu detektieren und der Steuereinheit anzuzeigen, wobei die Steuereinheit ausgebildet ist, ein Batteriemodul (40) mit der defekten Batteriezelle (41) durch Ausgeben geeigneter Steuersignale zu deaktivieren.

10. Ein Kraftfahrzeug mit einem elektrischen Antriebsmotor (13) zum Antreiben des Kraftfahrzeuges und einer mit dem elektrischen Antriebsmotor (13) verbundenen Batterie gemäß einem der Ansprüche 6 bis 9.

## Claims

1. Coupling unit (30) without its own energy supply for a battery module (40), the coupling unit (30) comprising a first input (31), a second input (32), a first output (33) and a second output (34), **characterized in that** the coupling unit (30) is designed to electrically directly connect the first input (31) to the first output (33) and the second input (32) to the second output (34) in response to a first control signal, and to electrically disconnect the first input (31) from the first output (33) and the second input (32) from the second output (34) and to electrically directly connect the first output (33) to the second output (34) in response to a second control signal.

2. Coupling unit (30) according to Claim 1, having at least one changeover switch (38, 39) which is designed to electrically connect either one of the first and second inputs (31, 3) to the first or, respectively, second output (33, 34) or to electrically connect a center point of the coupling unit (30) to the first or, respectively, second output (33, 34).

3. Coupling unit (30) according to Claim 1, having a first switch (35), which is electrically connected between the first input (31) and the first output (33), a second switch (36), which is electrically connected between the second input (32) and the second output (34), and a third switch (37), which is electrically connected between the first output (33) and the second output (34).

4. Coupling unit (30) according to Claim 3, in which at least one of the first switch (35), second switch (36) and third switch (37) is in the form of a semiconductor switch, preferably a MOSFET switch or an insulated gate bipolar transistor (IGBT) switch.

5. Battery module (40) having a coupling unit (30) without its own energy supply according to one of the preceding claims, and at least one battery cell (41), preferably a lithium-ion battery cell, which is electrically connected between the first input (31) and the second input (32) of the coupling unit (30), with a first terminal (42) of the battery module (40) being electrically connected to the first output (33) of the coupling unit (30) and a second terminal (43) of the battery module (40) being electrically connected to the second output (34) of the coupling unit (30).

6. Battery having one or more, preferably exactly three, battery module lines (50), with a battery module line (50) comprising a plurality of battery modules (40) according to Claim 5 which are connected in series, and having a control unit which is designed to generate the first and the second control signal for the coupling units (30) and to output said control signals to the coupling units (30).

7. Battery according to Claim 6, in which the coupling units (30) are designed in accordance with either of Claims 3 and 4 and in which the control unit is designed to close either the first switch (35) and the second switch (36) of a selected coupling unit (30) and to open the third switch (37) of the selected coupling unit (30), or to open the first switch (35) and the second switch (36) of the selected coupling unit (30) and to close the third switch (37) of the selected coupling unit (30), or to open the first, the second and the third switch (35, 36, 37) of the selected coupling unit (30).

8. Battery according to either of Claims 6 and 7, in which the control unit is also designed to electrically connect all the first inputs (31) of the coupling units (30) of a selected battery module line (50) to the first outputs (33) of the coupling units (30) of the selected battery module line (50) and all the second inputs (32) of the coupling units (30) of a selected battery module line (50) to the second outputs (34) of the coupling units (30) of the selected battery module line (50) at a first time, and to electrically decouple all the first and second inputs (31, 32) of the coupling units (30) of the selected battery module line (50) from the first and second outputs (33, 34) of the coupling units (30) of the selected battery module line (50) and to electrically connect the first and second outputs (33, 34) of the coupling units (30) of the selected battery module line (50) at a second time.

9. Battery according to one of Claims 6 to 8, having a sensor unit which is connected to the control unit, said sensor unit being designed to detect a defective battery cell (41) and to indicate this to the control unit, with the control unit being designed to deactivate a battery module (40) comprising the defective battery cell (41) by outputting suitable control signals.

10. Motor vehicle having an electric drive motor (13) for driving the motor vehicle, and having a battery, which is connected to the electric drive motor (13), according to one of Claims 6 to 9.

## Revendications

1. Unité de couplage (30) sans alimentation en énergie propre pour un module de batterie (40), l'unité de couplage (30) comprenant une première entrée (31), une deuxième entrée (32), une première sortie (33) et une deuxième sortie (34), **caractérisée en ce que** l'unité de couplage (30) est configurée pour, sur un premier signal de commande, relier électriquement directement la première entrée (31) à la première sortie (33) et la deuxième entrée (32) à la deuxième sortie (34) et, sur un deuxième signal, déconnecter électriquement la première entrée (31) de la première sortie (33) et la deuxième entrée (32) de la deuxième sortie (34) et relier électriquement directement la première sortie (33) à la deuxième sortie (34).

2. Unité de couplage (30) selon la revendication 1, comprenant au moins un commutateur inverseur (38, 39) qui est configuré pour relier électriquement soit l'une parmi la première ou la deuxième entrée (31, 32) à la première ou la deuxième sortie (33, 34), soit un point central de l'unité de couplage (30) à la première ou la deuxième sortie (33, 34).

3. Unité de couplage (30) selon la revendication 1, comprenant un premier commutateur (35) qui est branché électriquement entre la première entrée (31) et la première sortie (33), un deuxième commutateur (36) qui est branché électriquement entre la deuxième entrée (32) et la deuxième sortie (34), et un troisième commutateur (37) qui est branché électriquement entre la première sortie (33) et la deuxième sortie (34).

4. Unité de couplage (30) selon la revendication 3, avec laquelle au moins l'un parmi le premier commutateur (35), le deuxième commutateur (36) ou le troisième commutateur (37) est réalisé sous la forme d'un commutateur à semiconducteur, de préférence sous la forme d'un commutateur à MOSFET ou d'un commutateur à IGBT (Isolated Gate Bipolar Transistor - Transistor bipolaire à grille isolée).

5. Module de batterie (40) comprenant une unité de couplage (30) sans alimentation en énergie propre selon l'une des revendications précédentes, et au moins une cellule de batterie (41), de préférence une cellule de batterie aux ions de lithium, qui est branchée électriquement entre la première entrée (31) et la deuxième entrée (32) de l'unité de couplage (30), une première borne (42) du module de batterie (40) étant reliée électriquement à la première sortie (33) de l'unité de couplage (30) et une deuxième borne (43) du module de batterie (40) à la deuxième sortie (34) de l'unité de couplage (30).

6. Batterie comprenant une ou plusieurs, de préférence exactement trois branches de module de batterie (50), une branche de module de batterie (50) comportant une pluralité de modules de batterie (40) selon la revendication 5 branchés en série, et une unité de commande qui est configurée pour générer le premier et le deuxième signal de commande pour les unités de couplage (30) et les délivrer aux unités de couplage (30).

7. Batterie selon la revendication 6, avec laquelle les unités de couplage (30) sont configurées selon l'une des revendications 3 ou 4 et avec laquelle l'unité de commande est configurée soit pour fermer le premier commutateur (35) et le deuxième commutateur (36) d'une unité de couplage (30) sélectionnée et ouvrir le troisième commutateur (37) de l'unité de couplage (30) sélectionnée, soit pour ouvrir le premier commutateur (35) et le deuxième commutateur (36) d'une unité de couplage (30) sélectionnée et fermer le troisième commutateur (37) de l'unité de couplage (30) sélectionnée, soit pour ouvrir le premier, le deuxième et le troisième commutateur (35, 36, 37) de l'unité de couplage (30) sélectionnée.

8. Batterie selon l'une des revendications 6 ou 7, avec laquelle l'unité de commande est en outre configurée pour, à un premier instant, relier électriquement toutes les premières entrées (31) des unités de couplage (30) d'une branche de module de batterie (50) sélectionnée aux premières sorties (33) des unités de couplage (30) de la branche de module de batterie (50) sélectionnée et toutes les deuxièmes entrées (32) des unités de couplage (30) de la branche de module de batterie (50) sélectionnée aux deuxièmes sorties (34) des unités de couplage (30) de la branche de module de batterie (50) sélectionnée et, à un deuxième instant, déconnecter électriquement toutes les premières et les deuxièmes entrées (31, 32) des unités de couplage (30) de la branche de module de batterie (50) sélectionnée des premières et deuxièmes sorties (33, 34) des unités de couplage (30) de la branche de module de batterie (50) sélectionnée et relier électriquement les premières et les deuxièmes sorties (33, 34) des unités de couplage (30) de la branche de module de batterie (50) sélectionnée.

9. Batterie selon l'une des revendications 6 à 8, comprenant une unité de détection reliée à l'unité de commande, laquelle est configurée pour détecter une cellule de batterie (41) défectueuse et la signaler à l'unité de commande, l'unité de commande étant configurée pour désactiver un module de batterie (40) ayant la cellule de batterie (41) défectueuse en délivrant des signaux de commande appropriés.

10. Véhicule automobile comprenant un moteur de propulsion (13) destiné à propulser le véhicule automobile et une batterie selon l'une des revendications 6 à 9 reliée au moteur de propulsion (13).
